# EUROPÄISCHE PATENTANMELDUNG

(11) **EP 0 822 731 A2**
(43) Veröffentlichungstag der Anmeldung: **04.02.1998**
(21) Anmeldenummer: 97401710.5
(22) Anmeldetag: 16.07.1997
(51) Int. Cl.: H04Q 11/04

(54) **Verfahren, Schnittstelleneinrichtung und Vermittlungsstelle zum Umsetzen eines ersten Signalisierungsprotokolls (ISDN) in ein zweites Signalisierungsprotokoll (ATM)**

(30) Priorität: 31.07.1996 DE 19630845
(71) Anmelder: ALCATEL ALSTHOM COMPAGNIE GENERALE D'ELECTRICITE, 75008 Paris (FR)
(72) Erfinder: Schmitz, Bernhard, 70839 Gerlingen (DE)
(74) Vertreter: Brose, Gerhard, Dipl.-Ing.

(57) **Zusammenfassung**

Die Erfindung betrifft ein Verfahren zum Betreiben einer Schnittstelleneinrichtung (IWF) zur Verbindung eines ersten, im synchronen Zeitmultiplex (ISDN) mit fester zeitlicher Zuordnung von Zeitschlitzen zu Übertragungskanälen unter Zuhilfenahme eines ersten Signalisierungs-Protokolls (SI1) betriebenen Telekommunikations-Teilnetzes (ISDN) mit einem zweiten, im statistischen Multiplex (ATM) mit für jede Verbindung nach freier Vereinbarung unter Zuhilfenahme eines zweiten Signalisierungs-Protokolls (SA1) zugeordneter Übertragungskapazität betriebenen Telekommunikations-Teilnetz (ATM), bei welchem in der Schnittstelleneinrichtung eine Umsetzung der Signalisierung zwischen dem ersten Signalisierungs-Protokoll und dem zweiten Signalisierungs-Protokoll erfolgt, bei dem bei jedem Verbindungsaufbau die Signalisierung derart umgesetzt wird, daß die Anzahl der im ersten Teilnetz (ISDN) für die aufzubauende Verbindung reservierten Übertragungskanäle (Ch1,...,Ch6; Ch20,...,Ch30) und die für diese Verbindung im zweiten Teilnetz (ATM) zugeordnete Übertragungskapazität aneinander angepaßt werden, sowie eine Schnittstelleneinrichtung und eine Vermittlungsstelle mit einer solchen Schnittstelleneinrichtung.

## Beschreibung

Die Erfindung betrifft ein Verfahren zum Betreiben einer Schnittstelleneinrichtung nach dem Oberbegriff des Anspruchs 1, eine Schnittstelleneinrichtung nach dem Oberbegriff des Anspruchs 4 und eine Vermittlungsstelle mit einer solchen Schnittstelleneinrichtung nach dem Oberbegriff des Anspruchs 5.

Ein großer Teil des weltweiten Telekommunikationsnetzes wird derzeit im synchronen Zeitmultiplex betrieben. Ferngespräche, die den Hauptanteil des Verkehrsaufkommens in diesem Netz bilden, werden dabei in Übertragungskanälen mit 64 kbit/s übertragen. Diese Kanäle werden in verschiedenen Hierarchiestufen zu Kanalbündeln mit einer Vielzahl von Kanälen zusammengefaßt. Die nächste Hierarchiestufe liegt bei 2 Mbit/s (genau bei 2,048 Mbit/s). Dieser sogenannte Primärmultiplex enthält 30 Sprachkanäle, einen Synchronisations- und einen Signalisierungskanal, jeweils mit 64 kbit/s. Bei diesem synchronen Zeitmultiplex besteht eine feste zeitliche Zuordnung von Zeitschlitzen zu Übertragungskanälen.

Dieses Telekommunikationsnetz wird schon seit langem auch für andere Zwecke als die Übertragung von Sprache verwendet. Für viele Zwecke (derzeit ist Telefax ein wichtiges Anwendungsgebiet) wird dabei jeweils ein solcher Sprachkanal mit 64 kbit/s als Datenkanal verwendet. Ob diese Daten direkt digital oder mittels Modems über eine analog betriebene Anschlußleitung in das Netz eingespeist werden, ist für die vorliegende Erfindung unerheblich.

Die für Sprache angepaßte Übertragungskapazität von 64 kbit/s liegt dabei zwangsläufig auch der Übertragung von Daten zugrunde. In gewissem Maße läßt sich die Datenübertragung auch an vorgegebene Übertragungskanäle anpassen. Dies hat jedoch seine Grenzen. Deshalb gibt es einerseits spezialisierte Datennetze, die irgendwie mit dem übrigen Telekommunikationsnetz verbunden und damit Teilnetze hiervon sind. Andererseits besteht die Möglichkeit, mehrere Einzelkanäle gleichzeitig zu belegen und letztlich als Übertragungskanal mit höherer Kapazität zu verwenden.

Primär werden dabei Übertragungskanäle verwendet, die den höheren Multiplexstufen entsprechen, zum Beispiel also mit 2 Mbit/s. Aber auch andere Bündelungen, wie n x 64 kbit/s und n x 2 Mbit/s finden sinnvolle Anwendung.

Ein gänzlich anderer Lösungsansatz für die Datenübertragung ist die statistische Multiplextechnik. Diese wurde, ursprünglich als Paketvermittlungstechnik, gerade für die Übertragung von Daten entwickelt. Immer dann, wenn Daten zu übertragen sind, werden diese zu einem Paket zusammengefaßt und, unter Vorausstellung eines Adreßteils, zum Empfänger geschickt. Dies kann im asynchronen Zeitmultiplex, aber auch mit anderen Multiplextechniken zum Aufteilen der verfügbaren Kapazität erfolgen. Daraus hat sich die heutige ATM-Technik entwickelt (ATM = Asynchroneous Transfer Mode).

Dabei geht jeder Verbindung eine Verbindungsaufbauphase voraus, in der unter anderem ein Weg vom Rufenden zum Gerufenen voreingestellt wird. Dies erleichtert die Adressierung und erlaubt relative und damit kürzere Adressen. Es beinhaltet aber zwangsläufig auch das Erfordernis, die erforderliche Übertragungskapazität auf diesem Weg sicherzustellen. Dazu muß jeder Verbindung durch Vereinbarung eine bestimmte Übertragungskapazität zugeordnet werden. Beim heutigen ATM erfolgt dies beispielsweise durch Festlegung einer mittleren Datenrate, einer maximalen Datenrate und einer Verkehrsart wie ,,Konstante Datenrate" oder ,,Variable Datenrate".

Hier ist zunächst unerheblich, wie diese Zuordnung erfolgt. Es sind sowohl einmalige Vereinbarungen möglich, die dann für alle Verbindungen eines Teilnehmers gelten; bevorzugt wird bei jedem Verbindungsaufbau automatisch zwischen dem Teilnehmergerät und der Vermittlungsstelle eine Zuordnung von Übertragungskapazität erreicht; eine Anpassung der Vereinbarung während einer Verbindung wird nicht ausgeschlossen. Derzeit werden Vereinbarungen bevorzugt, bei denen die Abweichungen von einem zeitlichen Mittelwert so gering wie möglich sind. Vereinbarungen mit statistischen Schwankungen sind grundsätzlich nicht ausgeschlossen. Durch Pufferungen oder Anpassung der Vereinbarung kann dabei erreicht werden, daß die zur Verfügung gehaltene Übertragungskapazität wirtschaftlich ausgenutzt wird. Alle Vereinbarungen, einschließlich etwaiger Änderungen, müssen aber an alle längs des Übertragungsweges betroffenen Stellen durch Signalisierung weitergegeben werden.

Das schon eingangs genannte weltweite Telekommunikationsnetz wird aber immer in Teilsätze untergliedert sein, die mit unterschiedlicher Technologie und unterschiedlichen Normen arbeiten. Diese Teilnetze arbeiten über Schnittstelleneinrichtungen zusammen. Dabei wird auch die Signalisierung zwischen den beiden Teilnetzen mit ihren unterschiedlichen Signalisierungs-Progokollen umgesetzt.

Am 9.2.95 wurde von der ITU (International Telecommunication Union) die im Dezember 1994 verabschiedete Version der ITU-T-Empfehlung I.580, COM 13-R 30-E, veröffentlicht. Sie betrifft ,,General arrangements for interworking between B-ISDN and 64 kbit/s based ISDN".

Unter B-ISDN wird dabei die oben als ATM bezeichnete statistische Multiplextechnik verstanden. Unter ISDN wird die synchrone Zeitmultiplextechnik verstanden. Die genannte Empfehlung beschreibt eine ,,Interworking Function" zwischen ATM und ISDN mit n x 64 kbit/s. Der Fall n > 1 wird dabei zwar erwähnt, nicht jedoch näher ausgeführt.

Damit ist es möglich, jeden einzelnen Übertragungskanal auf der ISDN-Seite mit einem virtuellen Kanal auf der ATM-Seite zu verbinden. Weiter ist bekannt, einen kompletten Primärmultiplex mit 30 Nutz-, einem Synchronistations- und einem Signalisierungskanal als Ganzes mit einem virtuellen Kanal auf der ATM-Seite zu verbinden.

Der Erfindung liegt die Aufgabe zugrunde, für die genannten Schnittstelleneinrichtungen Lösungen anzugeben, mittels derer in beiden Teilnetzen in jedem konkreten Fall nur die jeweils benötigte Kapazität belegt ist.

Diese Aufgabe wird erfindungsgemäß gelöst durch ein Verfahren nach der Lehre des Anspruchs 1, eine Schnittstelleneinrichtung nach der Lehre des Anspruchs 4 und eine Vermittlungsstelle nach der Lehre des Anspruchs 5.

Die Schnittstelleneinrichtung am Übergang zweier Teilnetze wirkt gegenüber jedem der beiden Teilnetze wie ein Endgerät, das für abgehenden oder ankommenden Verkehr die erforderliche Kapazität festlegt. Dies ist nicht beschränkt auf die Verbindung von auf 64 kbit/s basierenden Verbindungen mit ATM. Es sind auch Bündelungen auf höherer Multiplexstufe, beispielsweise mit n x 2 Mbit/s oder auch Bündelungen der Form n x 64 kbit/s + m x 2 Mbit/s in Zusammenarbeit mit der ATM-Seite möglich. Entsprechend der heute verbreitetsten Multiplextechnik wird die ATM-Seite im folgenden auch als asynchrone Seite bezeichnet, im Gegensatz zur ISDN-Seite, die als synchrone Seite bezeichnet wird.

Bevorzugt wird diese Schnittstelleneinrichtung in eine der beiden benachbarten Vermittlungsstellen integriert.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Figur 1: zeigt den Übergang zwischen einem ISDN-Teilnetz und einem ATM-Teilnetz mittels einer erfindungsgemäßen Schnittstelleneinrichtung.
- Figur 2: zeigt ein Ablaufdiagramm für ein erfindungsgemäßes Verfahren, wobei der Verbindungsaufbau von der ISDN-Seite ausgeht.
- Figur 3: zeigt ein Figur 2 entsprechendes Ablaufdiagramm, wobei der Verbindungsaufbau von der ATM-Seite ausgeht.
- Figur 4: zeigt ein Ablaufdiagramm für einen Verbindungsabbau.

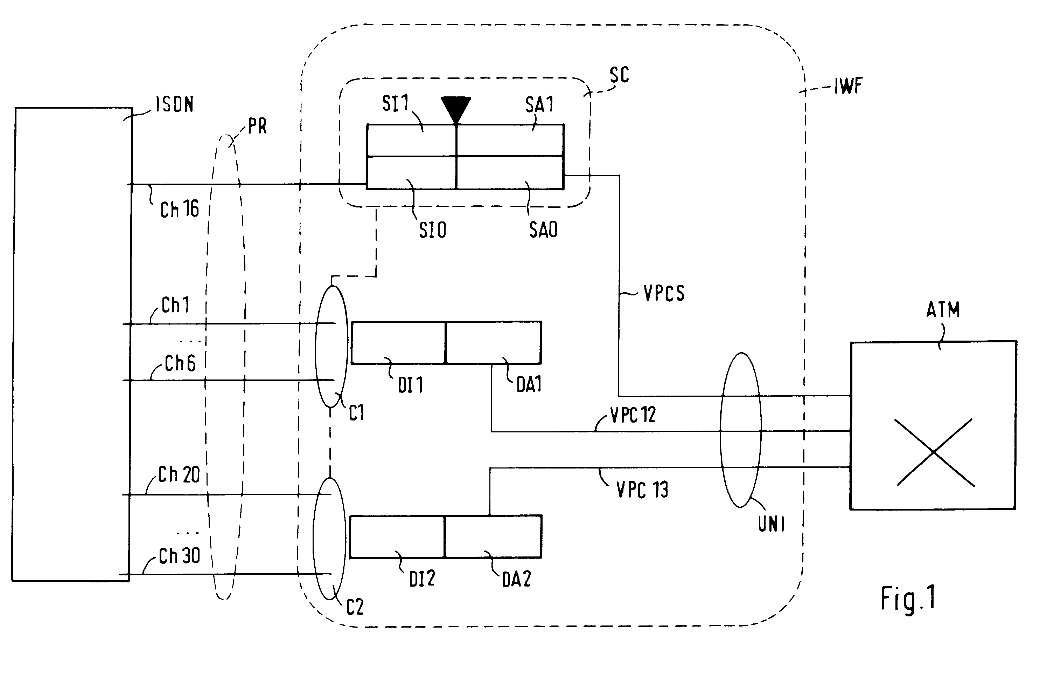

Anhand der Figur 1 wird zunächst die Anordnung am Übergang zwischen einem ISDN-Teilnetz und einem ATM-Teilnetz beschrieben. Das ISDN-Teilnetz wird hier dargestellt durch eine ISDN-Nebenstellenanlage ISDN und einen Primärmultiplexanschluß PR. Das ATM-Teilnetz wird hier dargestellt durch eine ATM-Vermittlungsstelle ATM und eine ATM-Schnittstelle UNI (UNI = User Network Interface). Der Übergang erfolgt in einer Schnittstelleneinrichtung IWF, in der die erforderlichen Übergangsfunktionen durchgeführt werden (IWF = interworking function).

Der Primärmultiplexanschluß PR führt augenblicklich drei Verbindungen, nämlich den Signalisierungskanal Ch 16 und zwei Nutzverbindungen C1 und C2. Die Nutzverbindung C1 umfaßt hier sechs Basiskanäle zu je 64 kbit/s, Ch 1, ..., Ch 6, die Nutzverbindung C2 umfaßt 11 Basiskanäle, Ch 20, ..., Ch 30. Daß hier die zu einer Nutzverbindung zusammengefaßten Basiskanäle aufeinanderfolgende Kanäle im Primärmultiplex sind, muß nicht zwingend so sein; es erleichtert hier nur die zeichnerische Darstellung. Weil üblich und die Darstellung erläuternd, wird hier unterstellt, daß in beiden Übertragungseinrichtungen gleiche Kapazitäten verwendet werden. Auch dies muß nicht zwingend so sein.

Auch in der ATM-Schnittstelle UNI sind augenblicklich drei Verbindungen aktiv, nämlich der Signalisierungskanal VPCS und zwei Nutzkanäle VPC 12 und VPC 13. Diese Kanäle VPCS, VPC 12 und VPC 13 sind jeweils durch die Angabe eines virtuellen Pfades und eines virtuellen Kanals (virtual path, virtual channel) bestimmt; der Signalisierungskanal wird beispielsweise durch VP0/VC5 gekennzeichnet. Im Gegensatz zu den Kanälen auf der ISDN-Seite ist die Kapazität eines Kanals auf der ATM-Seite nicht von vornherein festgelegt, sondern wird erst während des Verbindungsaufbaus auf die oben erwähnte Art festgelegt. Ein Nutzkanal auf der ATM-Seite nimmt dabei die Kapazität der entsprechenden Verbindung auf der ISDN-Seite auf.

Die Schnittstelleneinrichtung IWF weist eine Steuereinrichtung SC auf, sowie die für die Umsetzung der Datenströme erforderlichen Einrichtungen DI1, DA1, DI2 und DA2.

Die Schnittstelleneinrichtung IWF wirkt nach beiden Seiten wie ein Mehrfunktionsendgerät. Auf der ISDN-Seite ist jeder Verbindung, die einer Anwendung in diesem fiktiven Mehrfunktionsendgerät entspricht, eine Datenquelle und Datensenke, hier DI1 und DI2 zugeordnet. Entsprechend sind auf der ATM-Seite alle Verbindungen durch Datenquellen und Datensenken, hier DA1 und DA2, abgeschlossen. Damit ist dann jeder Datenquellenteil der einen Seite gleichzeitig Datensenkenteil der anderen Seite; Daten, die in DI1 als ISDN-Daten ankommen, werden inhaltlich unverändert von DA1 als ATM-Daten abgegeben. Das Datenformat ist natürlich gänzlich verschieden, beispielsweise auf der ISDN-Seite nach der ITU-T-Empfehlung G.704 und auf der ATM-Seite im AAL1-Datenformat (AAL = ATM Adaptation Layer) nach der ITU-T-Empfehlung I.363.

Im wesentlichen ist für jede der beiden Richtungen ein allen Datenquellen und Datensenken gemeinsamer Speicher vorhanden. Die Daten werden dann von der einen Seite nach einem Muster eingeschrieben, das dem Datenformat dieser Seite entspricht und auf der anderen Seite nach einem Muster ausgelesen, das dem Datenformat der anderen Seite entspricht. Abgesehen davon, daß sich nicht zwei gleiche ISDN-Seiten oder zwei gleiche ATM-Seiten gegenüberstehen, ist dies an sich ein ganz normaler Vermittlungsvorgang. Prinzipiell läßt sich dies auch auf den Übergang zwischen mehreren Ein- und Ausgangsleitungen auf beiden Seiten erweitern.

Das Muster, nach dem von einer Seite eingeschrieben oder aus dieser ausgelesen wird, wird während des Aufbaus einer Verbindung festgelegt. Dies erfolgt über die Signalisierungskanäle Ch16 und VPCS. Der Signalisierungskanal Ch16 der ISDN-Seite endet in einer Netzwerkschnittstelle SI0, die beispielsweise nach der ITU-T-Empfehlung X.75 arbeitet. In einer Protokolleinheit SI1, die beispielsweise nach der ITU-T-Empfehlung Q.931 arbeitet, werden die signalisierten Daten zugänglich gemacht. Der Signalisierungskanal VPCS der ATM-Seite endet in einer Schnittstelle SA0, die beispielsweise nach dem S.AAL-Protokoll nach den ITU-T-Empfehlungen Q.2130 und Q.2110 arbeitet. In einer zugehörigen Protokolleinheit SA1, die beispielsweise nach der ITU-T-Empfehlung Q.2931 arbeitet, werden auch die von dieser Seite signalisierten Daten zugänglich gemacht. Die somit von beiden Seiten zugänglichen Daten werden nun einerseits der Protokolleinheit der jeweils anderen Seite übergeben und andererseits intern verwertet. Damit können dann, wie oben erwähnt, während des Verbindungsaufbaus die Muster festgelegt werden, nach denen von beiden Seiten auf den gemeinsamen Speicher zugegriffen wird, der die Datenquellen und Datensenken in den Einrichtungen DI1, DI2, DA1 und DA2 darstellt.

Bei der Umsetzung der Signalisierung muß berücksichtigt werden, daß auf der synchronen Seite, im Beispiel also auf der ISDN-Seite, nur solche Übertragungskapazitäten möglich sind, die ganze Vielfache der Übertragungskapazität eines einzelnen Übertragungskanals, bei ISDN eines B-Kanals, betragen. Andererseits ist zu berücksichtigen, daß auf der asynchronen Seite, hier der ATM-Seite, im Prinzip zwar jede beliebige Übertragungskapazität möglich ist, daß aber bei geringen Übertragungskapazitäten sich eine recht große Verzögerung ergibt. Außerdem sind die Übertragungskapazitäten in beiden Teilnetzen, also auf beiden Seiten, aneinander anzupassen.

Im einfachsten Fall wird bei der Verbindungsaufnahme durch Beeinflussung der Signalisierung dafür gesorgt, daß auf der ATM-Seite nur solche Übertragungskapazitäten vereinbart werden, die ganze Vielfache der Übertragungskapazität eines Basiskanals im ISDN-Netz sind.

Die Muster, nach denen auf den gemeinsamen Speicher zugegriffen wird, werden im einfachsten Fall so gewählt, daß die Umsetzung der Nutzinformation derart erfolgt, daß aufgrund dieses Musters zumindest fiktiv ein Zwischenstadium eingefügt wird, in dem der jeweils zu übertragende Datenstrom in seiner ursprünglichen, übertragungstechnisch nicht gegliederten Form vorliegt.

In der Schnittstelleneinrichtung kann zusätzlich auch noch eine weitere Normwandlung erfolgen, beispielsweise zwischen BCD (binary coded decimal, binär kodierte Dezimalzahl) und ADPCM (adaptive differential pulse code modulation, Delta-Puls-Kode-Modulation). Damit kann dann eine Datenkompression verbunden sein. Jede derart erfolgte Normwandlung muß bei der Umsetzung der Signalisierung berücksichtigt werden.

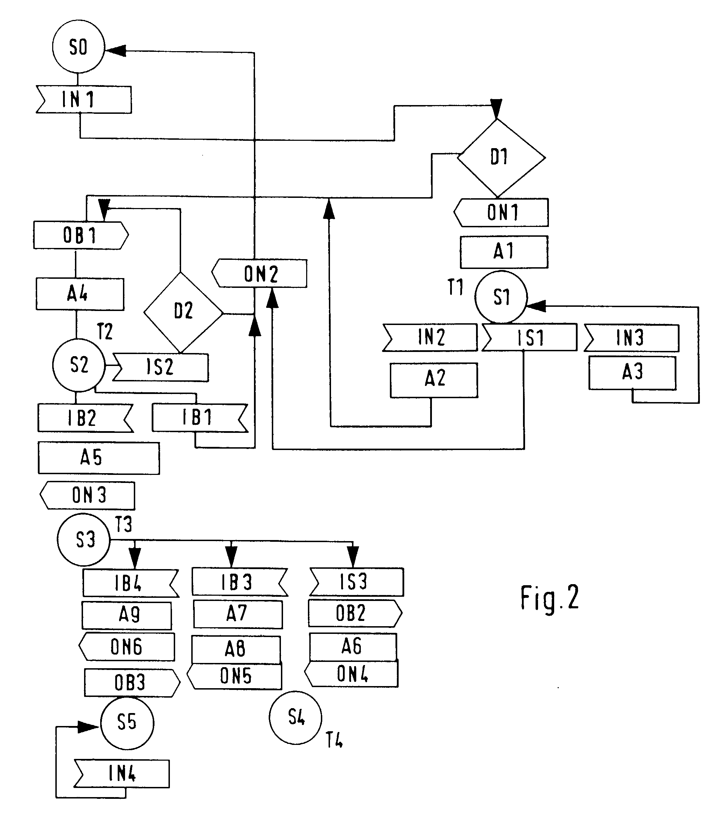

Anhand der Figuren 2 bis 4 wird nun der Ablauf kurz beschrieben. Vorab soll die Terminologie der Figuren erläutert werden. Zustände erhalten den Buchstaben S (state) und eine laufende Nummer. Entscheidungen erhalten den Buchstaben D (decision) und eine laufende Nummer. Ein- und Ausgaben erhalten zunächst den Buchstaben I (input) bzw. O (output), dann folgt ein Buchstabe, der angibt, von bzw. nach welcher Seite die Ein- oder Ausgabe erfolgt und anschließend folgt eine laufende Nummer. Die ISDN-Seite wird hier als Schmalbandseite angesehen und erhält den Buchstaben N (narrow band); die ATM-Seite wird entsprechend als Breitbandseite angesehen und erhält den Buchstaben B (broad band). Intern erzeugte und intern verarbeitete Eingabe-Meldungen erhalten den Buchstaben S (system) nach dem I. Den meisten der Zustände (states) ist ein Zeitgeber zugeordnet, der durch den Buchstaben T, gefolgt von der laufenden Nummer des zugehörigen Zustands, bezeichnet wird.

Anhand der Figur 2 wird zunächst ein von der ISDN-Seite ausgehender Verbindungsaufbau beschrieben. Ein im Ruhezustand S0 eingehender Verbindungsaufbauwunsch IN1 (setup request) wird zunächst einer Entscheidung D1 zugeführt. Enthält diese Meldung IN1 alle erforderlichen Angaben, so wird eine inhaltlich entsprechende Meldung OB1 (setup) an die ATM-Seite abgegeben. Fehlen noch Angaben, so werden diese durch eine Meldung ON1 (setup ack) noch angefordert; anschließend wird durch die Aktion Al ein Zeitgeber T1 (Zeitablauf nach etwa 10 bis 15 Sekunden) gestartet und ein Wartezustand S1 (overlap receiving) eingenommen. Werden durch eine Meldung IN2 (info complete) die fehlenden Angaben vervollständigt, so wird durch eine Akion A2 der Zeitgeber T1 angehalten und mit der Absendung der Meldung OB1 fortgefahren. Trifft eine weitere Meldung IN3 ein, so wird der Zeitgeber T1 durch eine Aktion A3 neu gestartet und weiter der Wartezustand S2 eingenommen. Ist der Zeitgeber T1 ergebnislos abgelaufen, was durch eine Systemmeldung IS1 angezeigt wird, so wird eine Meldung ON2 (release complete) zurückgeschickt, mit der die Schmalbandseite wieder ausgelöst wird. Anschließend wird der Ruhezustand S0 wieder eingenommen.

Wurde die Meldung OB1 (setup) an die Breitbandseite abgegeben, so wird durch eine Aktion A4 ein weiterer Zeitgeber T2 (Zeitablauf nach etwa 4 Sekunden) gestartet und ein weiterer Wartezustand S2 (call initiated) eingenommen.

Zeigt eine Systemmeldung IS2 an, daß der Zeitgeber T2 abgelaufen ist, wird durch die Entscheidung D2 überprüft, ob dies der erste Zeitgeberablauf war oder bereits der zweite. Beim ersten Zeitgeberablauf wird durch Absenden einer neuen Meldung OB1 (setup) ein neuer Versuch gestartet. Beim zweiten Zeitgeberablauf wird eine Meldung ON2 (release complete) zurückgeschickt und der Ruhezustand S0 wieder eingenommen. Dasselbe ergibt sich, wenn von der Breitbandseite eine Meldung IB1 (release complete) zurückkommt, die ein Nicht-Zustandekommen der Verbindung anzeigt.

Im Erfolgsfall wird der Wartezustand S2 durch eine Meldung IB2 (call proceeding) abgeschlossen. Durch eine Aktion A5 wird der Zeitgeber T2 angehalten und ein weiterer Zeitgeber T3 (Zeitablauf nach etwa 10 Sekunden) gestartet. Nach Zurücksendung einer Meldung ON 3 (call proceeding) wird ein weiterer Wartezustand S3 (outgoing call) eingenommen.

Durch eine Systemmeldung IS3 bei Ablauf des Zeitgebers T3 wird dieser Zustand verlassen und zur Breitbandseite eine Meldung OB2 (release) abgeschickt. In einer Aktion A6 wird ein neuer Zeitgeber T4 (Zeitablauf nach etwa 30 Sekunden) gestartet, eine Meldung ON4 (release) zurückgeschickt und ein Wartezustand S4 (release indication) eingenommen.

Kommt von der Breitbandseite eine Meldung IB3 (release), die das Nicht-Zustandekommen der Verbindung anzeigt, so wird durch eine Aktion A7 der Zeitgeber T3 angehalten, durch eine Aktion A8 der Zeitgeber T4 gestartet, eine Meldung ON5 (release) zurückgeschickt und der Wartezustand S4 (release indication) eingenommen.

Kommt von der Breitbandseite eine Meldung IB4 (connect), die das Zustandekommen der Verbindung anzeigt, so wird durch eine Aktion A9 der Zeitgeber T3 angehalten, durch eine Meldung ON6 (connect) das Zustandekommen der Verbindung weitergemeldet, die Meldung IB4 durch eine Meldung OB3 (connect acknowledge) bestätigt und ein aktiver Verbindungsstatus S5 (active) eingenommen. Eine danach von der Schmalbandseite eingehende Bestätigungsmeldung IN4 (connect acknowledge) wird entgegengenommen.

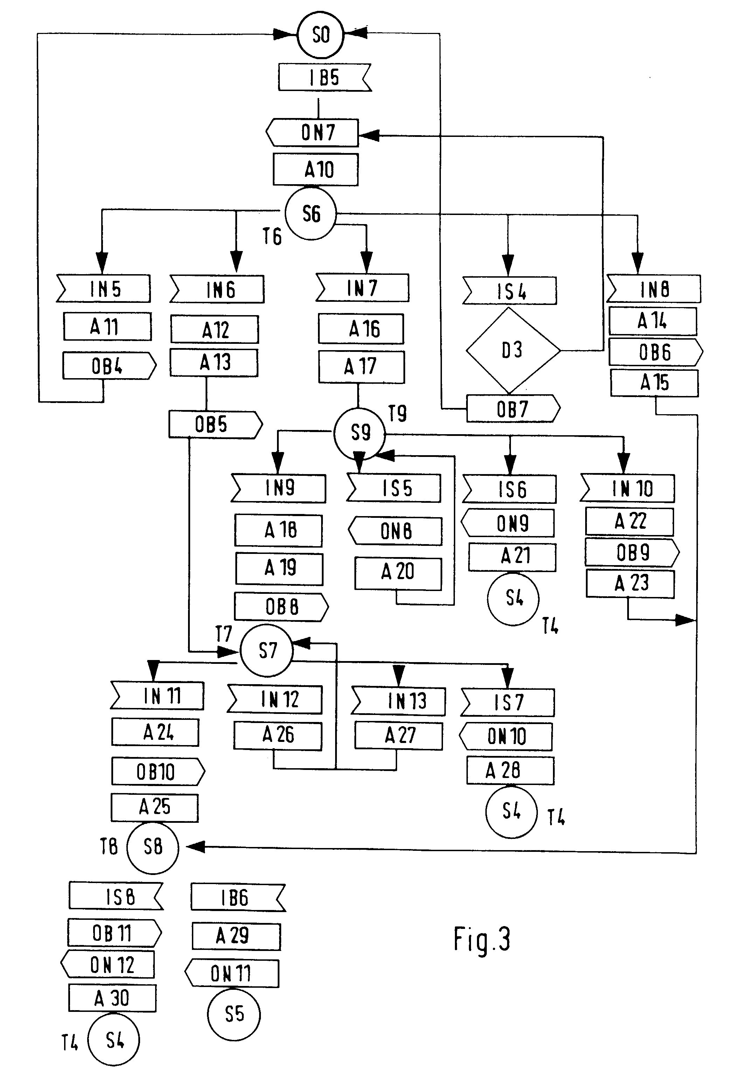

Anhand der Figur 3 wird nun ein von der ATM-Seite ausgehender Verbindungsaufbau beschrieben. Ein im Ruhezustand S0 eingehender Verbindungsaufbauwunsch IB5 (setup request) wird als Meldung ON7 (setup request) an die ISDN-Seite weitergegeben. Durch die Aktion A10 wird ein Zeitgeber T6 (Zeitablauf nach etwa 4 Sekunden) gestartet und in einen Wartezustand S6 (call present) übergegangen.

Der Wartezustand S6 kann durch verschiedene Ereignisse beendet werden: die ISDN-Seite lehnt durch eine Meldung IN5 (release complete) die Verbindung ab; die ISDN-Seite meldet durch eine Meldung IN6 (call proceed) eine Verzögerung; die ISDN-Seite bestätigt durch eine Meldung IN7 (setup acknowledge) den Verbindungsaufbauwunsch; die ISDN-Seite meldet sich innerhalb einer vorbestimmten Zeit nicht und es kommt vom Zeitgeber T6 eine Meldung IS4; die ISDN-Seite nimmt durch eine Meldung IN8 (connect) die Verbindung an.

Im Falle der Ablehnung durch die Meldung IN5 wird der Zeitgeber T6 durch eine Aktion All angehalten und die Nichtannahme als Meldung OB4 zur ATM-Seite zurückgegeben. Der Ruhezustand S0 wird wieder eingenommen.

Wird durch die Meldung IN6 eine Verzögerung gemeldet, so wird durch eine Aktion A12 der Zeitgeber T6 angehalten, ein weiterer Zeitgeber T7 (Zeitablauf nach etwa 10 Sekunden) durch eine Aktion A13 gestartet, der Inhalt der Meldung IN6 durch eine Meldung OB an die ATM-Seite weitergegeben und ein Zustand S7 (incoming call proceeding) eingenommen.

Nimmt die ISDN-Seite die Verbindung durch die Meldung IN8 an, so wird durch eine Aktion A14 der Zeitgeber T6 angehalten, die Annahme an die ATM-Seite durch eine Meldung OB6 (connect) weitergemeldet, durch eine Aktion A15 ein weiterer Zeitgeber T8 (Zeitablauf nach etwa 4 Sekunden) gestartet und ein Wartezustand S8 (incoming) eingenommen.

Bestätigt die ISDN-Seite durch die Meldung IN7 (setup acknowledge) den Verbindungsaufbauwunsch, so wird durch eine Aktion A16 der Zeitgeber T6 angehalten, durch eine Aktion A17 ein Zeitgeber T9 (Zeitablauf nach etwa 20 Sekunden) gestartet und zu einem Zustand S9 (overlap sending) übergegangen.

Reagiert die ISDN-Seite gar nicht auf den Verbindungsaufbauwunsch, Meldung ON7, so wird auf die Systemmeldung IS4 hin durch eine Entscheidung D3 überprüft, ob dies der erste Zeitablauf ist oder nicht. Nach dem ersten Zeitablauf wird eine zweite Meldung ON7 (setup) abgesandt, nach dem zweiten Zeitablauf wird eine Meldung OB7 (release complete) an die anfordernde ATM-Seite zurückgeschickt, der Verbindungsaufbauversuch abgebrochen und in den Ruhezustand S0 zurückgekehrt.

Für das Verlassen des Zustands S9 gibt es vier Möglichkeiten: die ISDN-Seite meldet durch eine Meldung IN9 (call proceeding) eine Verzögerung; das System meldet durch eine Meldung IS5, daß Information für den Verbindungsaufbau vorliegt, die noch durch eine Meldung ON8 an die ISDN-Seite zu senden ist; das System meldet durch eine Meldung IS6, daß der Zeitgeber T9 abgelaufen ist; oder die ISDN-Seite nimmt durch eine Meldung IN10 (connect) die Verbindung an.

Im Falle einer Verzögerungsmeldung IN9 wird durch eine Aktion A18 der Zeitgeber T9 angehalten, durch eine Aktion A19 der Zeitgeber T7 gestartet, durch eine Meldung OB8 (call proceeding) die ATM-Seite informiert und der Zustand S7 eingenommen.

Nach Absenden einer weiteren Meldung ON8 wird durch eine Aktion A20 der Zeitgeber T9 neu gestartet und der Zustand S9 beibehalten.

Ist der Zeitgeber T9 erfolglos abgelaufen, wird durch eine Meldung ON9 (disconnect) die Verbindung zur ISDN-Seite abgebrochen, durch die Aktion A21 der Zeitgeber T4 gestartet und der Zustand S4 (release indication) eingenommen.

Nimmt die ISDN-Seite die Verbindung aus dem Zustand S9 heraus durch die Meldung IN10 an, so wird durch eine Aktion A22 der Zeitgeber T9 angehalten, die ATM-Seite durch eine Meldung OB9 (connect) davon unterrichtet, durch eine Aktion A23 der Zeitgeber T8 gestartet und der Zustand S8 (incoming) eingenommen.

Wurde aufgrund einer Verzögerungsmeldung von der ISDN-Seite der Wartezustand S7 eingenommen, so können wieder vier Möglichkeiten auftreten: die ISDN-Seite nimmt durch eine Meldung IN11 (connect) die Verbindung an; die ISDN-Seite meldet durch eine Meldung IN12 (alert), daß das angerufene Endgerät zwar vom Verbindungswunsch in Kenntnis gesetzt wurde, aber noch keine Bestätigung abgegeben hat; die ISDN-Seite meldet durch eine Meldung IN13 (progress), daß für die Verarbeitung noch mehr Zeit benötigt wird; oder das System meldet durch eine Meldung IS7, daß der Zeitgeber T7 abgelaufen ist.

Wird durch die Meldung IN11 (connect) die Verbindung angenommen, so wird durch eine Aktion A24 der Zeitgeber T7 angehalten, die ATM-Seite durch eine Meldung OB10 (connect) hiervon unterrichtet, durch eine Aktion A25 der Zeitgeber T8 gestartet und der Zustand S8 eingenommen.

Im Falle einer Meldung IN12 (alert) wird durch eine Aktion A26 der Zeitgeber T7 angehalten und der Zustand S7 wieder eingenommen.

Auch im Falle einer Meldung IN13 (progress) wird durch eine Aktion A27 der Zeitgeber T7 angehalten und der Zustand S7 wieder eingenommen.

Meldet das System durch die Meldung IS7, daß der Zeitgeber T7 abgelaufen ist, so wird durch eine Meldung ON10 (disconnect) die Verbindung zur ISDN-Seite abgebrochen, durch eine Aktion A28 der Zeitgeber T4 gestartet und der Zustand S4 eingenommen.

Der Zustand S8 wurde erreicht, nachdem vorher an die ATM-Seite die Meldung ergangen ist, daß die ISDN-Seite die Verbindung annimmt (connect). Im Zustand S8 wird die Bestätigung der ATM-Seite abgewartet. Kommt diese durch eine Meldung IB6 an, so wird durch eine Aktion A29 der Zeitgeber T8 angehalten, die Bestätigung durch eine Meldung ON11 (connect acknowledge) weitergegeben und der Zustand S5 eingenommen. Geht von der ATM-Seite keine Bestätigung ein, so wird vom System durch eine Meldung IS8 gemeldet, wenn der Zeitgeber T8 abgelaufen ist. Nach beiden Seiten gehen dann Meldungen ab, OB11 (release) und ON12 (disconnect), womit dies gemeldet wird. Nach Starten des Zeitgeber T4 durch eine Aktion A30 wird der Zustand S4 eingenommen.

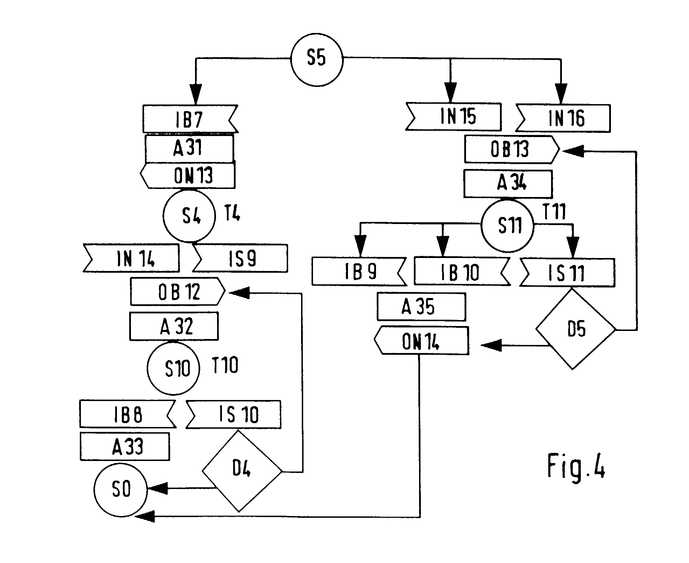

Anhand der Fig. 4 wird nun abschließend noch der Verbindungsabbau beschrieben:

Kommt von der ATM-Seite eine Meldung IB7 (release) mit der Aufforderung zum Verbindungsabbau, so wird durch eine Aktion A31 der Zeitgeber T4 gestartet, an die ISDN-Seite diese Aufforderung mit einer Meldung ON13 weitergegeben und der Zustand S4 eingenommen. Wird durch eine Meldung IN14 (release complete) von der ISDN-Seite der Abbau der Verbindung gemeldet, so wird dies durch eine Meldung OB12 (release) zur ATM-Seite weitergemeldet, durch eine Aktion A32 ein Zeitgeber T10 (Zeitablauf nach etwa 30 Sekunden) gestartet und ein Wartezustand S10 eingenommen.

Kommt nach Ablauf des Zeitgebers T4 keine Meldung IN14 (release complete), so gibt der Zeitgeber T4 eine Meldung IS9 ab, die dieselbe Folge hat, wie die Meldung IN14.

Kommt auf die Meldung OB12 (release) von der ATM-Seite eine Bestätigungsmeldung IB8 (release complete) zurück, so wird über eine Aktion A33 der Zeitgeber T10 angehalten und der Ruhezustand S0 wieder eingenommen. Kommt vor Ablauf des Zeitgebers T10 keine Bestätigung IB8, so wird über eine Systemmeldung IS10 und eine Entscheidung D4 beim ersten Mal die Meldung OB12 zur ATM-Seite wiederholt und beim zweiten Mal ebenfalls der Ruhezustand S0 eingenommen.

Wird der Verbindungsabbau von der ISDN-Seite entweder durch eine Meldung IN15 (disconnect) oder, je nach der jeweiligen Ursache, durch eine Meldung IN16 (release) gemeldet, so wird dies zunächst in einer Meldung OB13 (release) an die ATM-Seite weitergemeldet, durch eine Aktion A34 ein Zeitgeber T11 (Zeitablauf nach etwa 30 Sekunden) gestartet und dann ein Zustand S11 (release request) eingenommen.

Im Zustand S11 wird eine Bestätigungsmeldung IB9 (release) oder IB10 (release complete) erwartet. Kommt eine dieser Meldungen, so wird durch eine Aktion A35 der Zeitgeber T11 angehalten, zur ISDN-Seite eine Meldung ON14 (release complete) abgesandt und der Ruhezustand S0 eingenommen. Geht vor Ablauf des Zeitgebers T11 keine Meldung IB9 oder IB10 ein, so wird über eine Systemmeldung IS11 beim ersten Mal die Meldung OB13 zur ATM-Seite wiederholt und beim zweiten Mal ebenfalls zunächst eine Meldung ON14 abgesandt und dann der Ruhezustand S0 eingenommen.

Ist die Schnittstelleneinrichtung IWF in eine der beiden benachbarten Vermittlungsstellen ISDN oder ATM integriert, so entfällt möglicherweise der entsprechende Signalisierungskanal Ch16 oder VPCS. Diese Aufgabe wird dann von anderen vermittlungsstelleninternen Verbindungen wahrgenommen.

## Patentansprüche

1. Verfahren zum Betreiben einer Schnittstelleneinrichtung (IWF) zur Verbindung eines ersten, im synchronen Zeitmultiplex (ISDN) mit fester zeitlicher Zuordnung von Zeitschlitzen zu Übertragungskanälen unter Zuhilfenahme eines ersten Signalisierungs-Protokolls (SI1) betriebenen Telekommunikations-Teilnetzes (ISDN) mit einem zweiten, im statistischen Multiplex (ATM) mit für jede Verbindung nach freier Vereinbarung unter Zuhilfenahme eines zweiten Signalisierungs-Protokolls (SA1) zugeordneter Übertragungskapazität betriebenen Telekommunikations-Teilnetz (ATM), bei welchem in der Schnittstelleneinrichtung eine Umsetzung der Signalisierung zwischen dem ersten Signalisierungs-Protokoll und dem zweiten Signalisierungs-Protokoll erfolgt, **dadurch gekennzeichnet, daß** bei jedem Verbindungsaufbau die Signalisierung derart umgesetzt wird, daß die Anzahl der im ersten Teilnetz (ISDN) für die aufzubauende Verbindung reservierten Übertragungskanäle (ch1,...,ch6; Ch20,...,Ch30) und die für diese Verbindung im zweiten Teilnetz (ATM) zugeordnete Übertragungskapazität aneinander angepaßt werden.

2. Verfahren nach Anspruch 1, dadurch gekennzeichnet, daß zwischen der Schnittstelleneinrichtung (IWF) und dem zweiten Teilnetz (ATM) nur solche Übertragungskapazitäten zugelassen werden, die ganze Vielfache der Übertragungskapazität eines Übertragungskanals (Ch1,...,Ch6,Ch20,...,Ch30) im ersten Teilnetz (ISDN) sind.

3. Verfahren nach Anspruch 1, dadurch gekennzeichnet, daß die Umsetzung der Nutzinformation derart erfolgt, daß aufgrund eines während des Verbindungsaufbaus durch Signalisierung (SI1, SA1) festgelegten Musters zumindest fiktiv ein Zwischenstadium eingefügt wird, in dem der jeweils zu übertragende Datenstrom in seiner ursprünglichen, übertragungstechnisch nicht gegliederten Form vorliegt.

4. Schnittstelleneinrichtung (IWF) zur Verbindung eines ersten im synchronen Zeitmultiplex (ISDN) mit fester zeitlicher Zuordnung von Zeitschlitzen zu Übertragungskanälen unter Zuhilfenahme eines ersten Signalisierungs-Protokolls (SI1) betriebenen Telekommunikations-Teilnetzes (ISDN) mit einem zweiten im statistischen Multiplex (ATM) mit für jede Verbindung nach freier Vereinbarung unter Zuhilfenahme eines zweiten Signalisierungs-Protokolls (SA1) zugeordneter Übertragungskapazität betriebenen Telekommunikations-Teilnetz (ATM), in der eine Umsetzung der Signalisierung zwischen dem ersten Signalisierungs-Protokoll (SI1) und dem zweiten Signalisierungs-Protokoll (SA1) erfolgt, **dadurch gekennzeichnet, daß** bei jedem Verbindungsaufbau die Signalisierung derart umgesetzt wird, daß die Anzahl der im ersten Teilnetz (ISDN) für die aufzubauende Verbindung reservierten Übertragungskanäle (Ch1,...,Ch6; Ch20,...,Ch30) und die für diese Verbindung im zweiten Teilnetz (ATM) zugeordnete Übertragungskapazität aneinander angepaßt werden.

5. Vermittlungsstelle (ISDN, ATM) mit einer Schnittstelleneinrichtung (IWF) zur Verbindung eines ersten im synchronen Zeitmultiplex (ISDN) mit fester zeitlicher Zuordnung von Zeitschlitzen zu Übertragungskanälen unter Zuhilfenahme eines ersten Signalisierungs-Protokolls (SI1) betriebenen Telekommunikations-Teilnetzes (ISDN) mit einem zweiten im statistischen Multiplex (ATM) mit für jede Verbindung nach freier Vereinbarung unter Zuhilfenahme eines zweiten Signalisierungs-Protokolls (SA1) zugeordneter Übertragungskapazität betriebenen Telekommunikations-Teilnetz(ATM), in der eine Umsetzung der Signalisierung zwischen dem ersten Signalisierungs-Protokoll (SI1) und dem zweiten Signalisierungs-Protokoll (SA1) erfolgt, **dadurch gekennzeichnet, daß** bei jedem Verbindungsaufbau die Signalisierung derart umgesetzt wird, daß die Anzahl der im ersten Teilnetz (ISDN) für die aufzubauende Verbindung reservierten Übertragungskanäle (Ch1,...,Ch6; Ch20,...,Ch30) und die für diese Verbindung im zweiten Teilnetz (ATM) zugeordnete Übertragungskapazität aneinander angepaßt werden.
